# EUROPEAN PATENT SPECIFICATION

(11) **EP 3 911 442 B1**
(45) Date of publication and mention of the grant of the patent: **03.04.2024**
(21) Application number: 20740858.4
(22) Date of filing: 15.01.2020
(51) Int. Cl.: B01L 3/02, G01N 35/10, G01N 35/00, G01N 35/04

(54) **PIPETTOR CALIBRATION SYSTEM DEVICES AND METHODS THEREOF**
PIPETTIERER-KALIBRIERSYSTEMVORRICHTUNGEN UND VERFAHREN DAFÜR
DISPOSITIFS DE SYSTÈME D'ÉTALONNAGE DE PIPETTE ET PROCÉDÉS ASSOCIÉS

(30) Priority: 17.01.2019 US 201962793471 P
(43) Date of publication of application: 24.11.2021
(73) Proprietor: Shahar, Dan Yehoshoa, 8533800 Lehavim (IL); Shafir, Itzhak, 1791500 Hoshaya (IL)
(72) Inventor: Shahar, Dan Yehoshoa, 8533800 Lehavim (IL); Shafir, Itzhak, 1791500 Hoshaya (IL)
(74) Representative: Pearl Cohen Zedek Latzer Baratz UK LLP
(86) International application number: PCT/IL2020/050066
(87) International publication number: WO 2020/148764

(56) References cited:
- EP-A1- 3 385 719
- EP-B1- 1 299 033
- CN-A- 106 799 266
- CN-A- 106 840 300
- CN-A- 107 115 905
- CN-A- 107 917 747
- DE-A1-102014 213 438
- GB-A- 2 536 468
- JP-A- H0 755 815
- US-A- 3 612 434
- US-A- 5 343 769
- US-A- 5 638 149
- US-A1- 2005 013 673
- US-A1- 2005 182 609
- US-A1- 2009 000 351
- US-A1- 2009 142 844
- US-A1- 2013 026 965
- US-A1- 2018 133 893
- US-A1- 2018 154 349

## Description

### BACKGROUND OF THE INVENTION

A pipette, a pipettor, or a pipet is a hand-held device used to transfer or provide a small and accurate amount of fluids, usually used in chemical and biological laboratories. The pipette is the most basic tool used in each laboratory. Every person who begins to work in the lab, in the framework of studies, research or work, is trained to use a pipette. A number of such pipettors can usually be found in each laboratory. Curranty, there is no organized, consistent and uniform training procedure for use with pipettors and no follow-up for a uniform certification. Each laboratory and each organization train and use pipettors according to their understanding and discretion.

Every procedure in a chemical or a biological laboratory begins with the use of a pipettor. Procedures such as PCR, Elisa crystallography, etc. involve a high-tech systems and very expensive equipment. All these processes begin by manually preparing the sample and working with the pipettors. Many deviations in the results can be prevented by calibrating and checking the pipettor regularly (the recommendation is between once a week to once a month), and by a proper technique for the pipettor use practiced by laboratory employees. Currently, the laboratories do not have a means for calibrating pipettors, and there is no standard guidelines of training of laboratory workers for proper use of pipettor and proper testing for the pipettors. Most laboratories calibrate pipettors once a year, while only a small number of laboratories perform calibration to the pipettors more frequently, such as once a month (e.g. in the field of baby food and pharmaceutical industry). In any event, this scope of calibration is not sufficient to maintain equipment service and as a result, the likelihood of errors and mistakes in the lab's work increases.

There are several factors that affect the quality of the work with pipettors in the laboratory:
- The laboratory technician pipettor's use technique: this factor is responsible for a large part of a pipettor's use mistakes. The technique must be adapted to the required application and implement it with precision. Today there is very little follow-up, if any, for mistakes arising from incorrect use of a pipettor.
- The tip, which is configured for leading the fluid from the pipettor to the test, should be suitable for pipettor type/model, to the type of work it performs and to the quality required. When one replaces the type of tip, the pipettor must recalibrated to adjust the tip to pipettor and verify a proper result.
- Environmental conditions: temperature, barometric pressure, humidity.
- A mechanical malfunction in the pipettor or lack of pipettor's calibration. The pipettor is a delicate and complex mechanical instrument that may not be calibrated with a significant portion of the time. Every drop down and even a careless laying of the pipettor on a table, at the end of a job, can take it out of calibration, but since there is no effective and quick way to perform calibration to these devices, these are usually ignored.

There are different methodologies for determining the required calibration level of the pipettors. One of them uses the desired level of reliability and the mean time between failures (MTBF) index to determine how often a calibration is needed. The reliability level describes the percentage of proper pipettors in the lab at a given moment. For example, the meaning of 95% reliability is that at any given time 95% of the pipettors in the laboratory should be normal and calibrated, while only 5% can be malfunctioned.

A laboratory manual calibration of a pipettor is conducted in a controlled temperature environment and under precise working procedures. Usually ten weight measurements are conducted, per three different liquid volumes (10% of the full volume, 50% and 100%), for each pipettor. Total is usually 30 measurements, per a pipettor. The liquid measurement is performed on an accurate weight scale having accuracy of 10⁻⁶ *gram,* usually using a display of 4 to 6 digits. The pipettor's volume is adjusted by rotating the wheel-button, for each of the required liquid volumes. Since the calibrating is conducted manually, there can be a difference in the calibration features between one calibrating employee and to another, even at the same laboratory.

There are many factors that affect manual calibration quality: the equipment, the workspace, hand stability of the calibrating person, grip orientation of the calibrating person (perpendicular or tilted), the warmth of the hand of the calibrating person, fatigue of the calibrating person and environmental conditions (like: temperature, humidity, tip selection, and liquid quality). At the end of the manual calibrating process, the pipette is calibrated and found within the deviation limits permitted by a standard, for example ISO8655, however the process is manual, slow, non-repeatable and requires the preservation of a specific working environment and specific and controlled work conditions. As a result, the calibration process of one pipettor by an experienced calibrator takes approximately 30-45 *minutes.* The calibration of a multi-channel pipettor takes about 2 to 4 *hours.* When it comes to a large laboratory having hundreds and thousands of pipettors, the calibration is usually be performed through a company that provides the service to this laboratory and not by the laboratory's staff.

In this context, the exhaustion factor among technicians should be mentioned, dealing with pipettors calibration continuously in a large part of their work day. Technicians in companies providing pipettors calibration services for laboratories, are intensively engaged in manual calibration process. Some of the companies are aware of the cause of exhaustion and limit the number of pipettors calibration per an employee, for one day's work. This is to reduce the effect of exhaustion (fatigue) on the results of the calibration. While most often, the calibration of a pipettor is within the required range, the dispersion of the measurement is too large.

Most of the pipettors in laboratories are in volumes of 20-1000 micro-liters. These pipettors' calibration requires a weight precision of about 10⁻⁵ *gram.* About 15% of the pipettors are 8 multi-channel or 12-multi channel pipettors that are bound together (usually used for a case of plurality of test tubes). About 10% are small pipettors of having a volume of 0.1-20 micro-liter. The calibration of such small pipettors requires a weight scale in the rank of 10⁻⁶ *gram* and requires a touch of the tip with the tool wall or a paper surface, to dispense the liquid drop onto the weight scale.

CN 107 917 747 A discloses a device configured to calibrate a pipette and a corresponding method for calibration.

### SUMMARY OF THE INVENTION

The present invention relates to a system, as defined in claim 1, configured to automatically calibrate a pipette and to a method, as defined in claim 12, for automatic calibration of at least one pipette using such a system. Preferred features of the invention are set out in the dependent claims.

According to embodiments of the invention, a new pressing-device is provided configured to push a button of a pipette, comprising:
- a firm base,
- a linear actuating-device firmly connected to the base, and configured to provide linear motion and a force (F1), via its actuating-lever;
- a pressing-lever, connected at a proximal-section thereof to the actuating-lever, and configured to temporarily communicate, via a distal-section thereof, with the button and therefore apply a force (F2 or F3) on the button.

According to some embodiments, the pressing-lever is connected at the proximal-section thereof to the actuating-lever via an axis-pin; and wherein the pressing-lever is connected to the base, via another axis-pin, at a predetermined location of the pressing-lever, configured to provide a predetermined force relation between the force (F1) applied at the proximal section and the force (F2) applied at the distal section.

According to some embodiments, pressing-device the further comprising at least one spring configured to control and/or restrain the motion of the actuating-lever, such that the force (F3), which is applied onto the plugger-button depends on the spring's stiffness coefficient (k) and the spring's deformation length, due to the motion of the actuating-lever According to some embodiments, the distal-section of the pressing-lever further comprises a wheel or a ball in a socket, configured for the temporary communication of the pressing-lever with the button.

According to some embodiments, the actuating-lever comprises a piston-spacer, configured to reduce the amplitude of the actuating-lever's motion.

According to some embodiments, the pressing device is configured to be firmly connected to a robotic arm, as an end effector thereof.

According to some embodiments, the pressing-device further comprises at least one processor, configured to control the actuating-device.

According to some embodiments, the linear actuating-device further comprises an analog location tracker, in communication with the processor, configured to measure the motion of the actuating-lever.

According to some embodiments, the pressing-device further comprising a pressure regulator, in communication with the processor, configured to measure and control the applied force (F1), at the proximal section of the pressing-lever.

According to some embodiments, the pressure regulator is configured to control the applied force (F1) and thereby the applied force (F2 or F3) to push the button to a first stop and/or a second stop thereof.

According to some embodiments, the applied force (F2 or F3) is selected between 0 to 11 Kg.

According to some embodiments, the resolution of the applied force (F2 or F3) is selected between 0.001 to 0.5 Kg.

According to some embodiments, the pressing-device further comprising a gripping-device, firmly connected to the base and configured to firmly and temporarily hold the pipette.

According to some embodiments, the griping-device comprises at least one of:
- rigid jaws or rigid claws, configured grasp by direct impact upon pipette;
- at least one attraction-element configured to temporarily provide attraction forces applied to the pipette surface, forces selected from: vacuum, magneto-adhesion, or electro-adhesion;
- at least one adhesion-element configured to be temporarily attached to the pipette by: a glue or surface tension; and
- any combination thereof.

According to some embodiments of the invention, a new rotating-device is provided configured for turn/dial a button of a pipette, comprising:
- a firm base;
- a rotary-motor, configured to provide a rotary motion and moment (M);
- at least one active-wheel, in rotary communication with the rotary-motor, configured to apply the moment (M) onto the button and turn/dial the button; and
- a coupling-assembly mounted via a rail on the base, configured to carry the rotary-motor and the at least one of the active-wheels and to couple the active-wheel/s to the button and/or to separate the active-wheel/s from the button, and therefore to control the application of the moment (M) onto the button.

According to some embodiments, the coupling-assembly comprises two opposing-sections, the first-section is configured to carry the rotary-motor and at least one of the active-wheels, and the second-section is configured to carry another active-wheel or a passive-wheel, and wherein the coupling-assembly is configured to couple all the wheels from two sides of the button.

According to some embodiments, the coupling-assembly further comprises a compression-spring configured to bring the two opposing-sections one towards the other, and therefore to apply a compression-force onto the button.

According to some embodiments, the coupling assembly further comprises a piston comprising a piston-lever; the piston-lever is located between the two opposing-sections, configured to separate the two opposing-sections, when the piston-lever protrudes out of the piston.

According to some embodiments, the active-wheel and/or the passive-wheel is mounted to the coupling-assembly via a spring/s, configured to allow motion along the axis of the wheel/s.

According to some embodiments, the active-wheel and/or the passive-wheel comprises rubber.

According to some embodiments, the rotating-device further comprising at least one processor configured to control the rotary-motor and/or the coupling-assembly, therefore to control the rotation/dialing of the button.

According to some embodiments, the rotating device further comprising a least one imaging-sensor, in communication with the processor, configured to image digits of a volume indicator of the pipette and optionally its indicated measuring unit, and optionally wherein the processor is further configured to analyze the provided image and to control the rotation of the button, based on the analyzed image, to a predetermined value.

According to some embodiments, the rotating device further comprising illumination element, configured to illuminate the volume indicator.

According to some embodiments, the rotating-device further comprising a gripping-device, firmly connected to the firm base and configured to firmly and temporarily hold the pipette.

According to the invention, a new system is provided configured to automatically calibrate a pipette, comprising:
- a robotic arm, configured to translate and rotate its end effector;
- a pressing-device firmly connected to the robotic arm, to serve as its end effector, the pressing device configured to hold a pipette and to press a plunger-button of the pipette;
- a rotating-device, configured to rotate/dial a wheel-button of the pipette;
- at least one liquid source;
- at least one scaling element, configured to measure weight;
- at least one input-device, configured to receive real-time input-data; and
- at least one processor, in communication with the input-device configured to analyze the input-data and accordingly to:
   ▪ control the motion of the robotic arm, therefore control location and orientation of the pipette;
   ▪ control the rotating-device, therefore control a rotation angle / dialing applied onto the wheel-button;
   ▪ control the pressing-device, therefore control pressure applied onto the plunger-button and control the gripping and release of the pipette;
   ▪ evaluate calibration of the pipette, in reference to a predetermined standard; and
   ▪ output a calibration report for the pipette.

According to some embodiments, the system is provided within a closed cabin, with an optional exception of at least some of the processors; the cabin is configured to enable environment control there within.

According to some embodiments, the robotic arm comprises at least four rotational degrees of freedom (DOF).

According to some embodiments, the input-device comprises at least one of: a keyboard, a scanner, a touch screen, a microphone, a camera, a temperature sensor, a humidity sensor, a illumination sensor, a water density sensor, a sensor which determines the liquid quantity at the liquid source, the scaling element, an atmospheric pressure sensor,, and any combination thereof, configured to collect data about the pipette features and/or the systems features.

According to some embodiments, the input-device comprises at least one imaging-sensor, configured to take image/s of the pipette.

According to some embodiments, the processor is further configured to evaluate a required rotation-angle or dialing, based on a received and analyzed image of digits of a volume indicator and optionally an indicated measuring unit.

According to some embodiments, the system further comprising at least one illumination element, configured to illuminate at least the volume indicator of the pipette.

According to some embodiments, the input-device comprises at least one illumination sensor; and wherein the processor is further configured to control the illumination element.

According to some embodiments, the system further comprising at least one temperature control device, configured to adjust the cabin's temperature and/or the liquid's temperature in the liquid source; the input-device comprises at least one temperature sensor; and the processor is further configured to control the temperature control device to a predetermined temperature.

According to some embodiments, the system further comprising at least one humidity control device, configured to adjust the cabin's humidity; the input-device comprises at least one humidity sensor; and the processor is further configured to control the humidity control device to a predetermined humidity.

According to some embodiments, the input-data comprises at least one of:
- at least one reference standard, to be provided as the predetermined standard;
- weight, volume, and/or dimensions of the liquid source /liquid tank;
- identification data of the pipette;
- at least one image of the pipette, received from an imaging sensor;
- at least one current image of the pipette's volume indicator, received from an imaging sensor;
- current illumination intensity, received from an illumination sensor;
- current cabin's temperature, received from a temperature sensor;
- current liquid temperature in the liquid source, received from a temperature sensor;
- current cabin's humidity, received from a humidity sensor;
- current location and orientation of the pipette, received from a processor of the robotic arm;
- current liquid weight, received from the scaling element;
- current atmospheric pressure;
- calculated Z factor;
- current water density; and
- any combination thereof.

According to some embodiments, the system further comprises at least one display device, configured to display the input data and/or the calibration report.

According to some embodiments, the plunger-button and the wheel-button are configured as a single button.

According to some embodiments, the report comprising selected from: pass, fail, need adjustment, check for mechanical malfunction, and combination thereof.

According to the invention, a new method is provided for automatic calibration of at least one pipette using the system according to the above mentioned, the method comprising:
- receiving the input-data, via the at least one input-device;
- holding and/or releasing a pipette, via the pressing-device;
- moving the pipette to a predetermined location and/or orientation, via the robotic arm;
- applying a predetermined rotation angle onto a wheel-button of the pipette, via the rotating-device;
- applying a predetermined pressure onto a plunger-button of the pipette, via the pressing-device;
- measuring liquid weight, via the scaling element;
- evaluating a calibration of the pipette, in reference to a predetermined standard, via the processor; and
- providing a calibration report for the pipette, via the processor and a display device.

According to some embodiments, the step applying a predetermined rotation angle onto a wheel-button, comprises selecting a liquid volume for the pipette.

According to some embodiments, the step of selecting a liquid volume for the pipette comprises analyzing, via the processor, an image of a volume indicator of the pipette, provided by an imaging sensor.

According to some embodiments, the step of applying a predetermined pressure onto the plunger-button, comprises drawing liquid from the liquid source into the pipette.

According to some embodiments, the step of applying a predetermined pressure onto the plunger-button, comprises dispensing the liquid from the pipette onto the scaling element.

According to some embodiments, the steps of drawing, dispensing, and measuring, are repeated in cycles, for a predetermined number of times, per several predetermined selected liquid volumes; and wherein the step of evaluating is based on a selected collection of the repeated cycles.

According to some embodiments, the selecting of the collection of cycles, is based on statistic tools selected from: standard deviation, measurement random error, measurement uncertainty, etc.

According to some embodiments, the method further comprising at least one step selected from:
- controlling temperature of the cabin and/or of the liquid in the liquid source, via at least one temperature sensor and at least one temperature control device;
- controlling humidity of the cabin, via at least one humidity sensor, and at least one humidity control device;
- controlling the illumination onto a volume indicator of the pipette, via at least one illumination sensor and at least one illumination element;
- sterilizing the pipette via an ultra violet radiation device;
- selecting a tip to be applied onto the pipette, according to the type of the pipette and its task;
- collecting and applying tip onto the pipette, via the robotic arm;
- ejecting the tip from the pipette;
- removing used liquid from the container;
- displaying the input data and/or the calibration report, via the displaying-device and/or via the printing device; and
- and any combination thereof.

According to some embodiments, the method further comprising collecting a pipette from a predetermined location and/or driving out the pipette to a predetermined location, via the controlling of the robotic arm and the pressing device.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figs. 1A****,** **1B****,** and **1C** schematically demonstrate a new system, configured to automatically calibrate a pipette, according to some embodiments of the invention;
**Figs. 2A****,** **2B****,** **2C, 2D****,** **2E** and **2F** schematically demonstrate a new pressing-device configured to push a plunger-button of a pipette, according to some embodiments of the invention;
**Figs. 3A****,** **3B** and **3C** schematically demonstrate a new rotating-device, configured to turn or to dial a wheel-button of a pipette, according to some embodiments of the invention;
**Fig. 4** schematically demonstrates a new method for automatic calibration of at least one pipette, according to some embodiments of the invention; and
**Figs. 5A** and **5B** demonstrate examples for calibration reports; in Fig. 5A and example for a positive result and in Fig. 5B and example for a negative result, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention.

The terms "calibrate" and "calibration", as used herein refers, according to some embodiments, to a process configured to standardize (something, such as a measuring instrument) by determining the deviation from a standard, so as to ascertain the proper correction factors.

The term "firm", as used herein refers, according to some embodiments, to having a solid or compact structure that resists stress or pressure or force moment. The term "firmly" as used herein refers, according to some embodiments, to securely or solidly fixed in place while resisting stress or pressure or force moment.

The term "end effector", as used herein refers, according to some embodiments, to a device at the end of a robotic arm, designed to interact with the environment.

According to some embodiments, the term "button" as used herein, can be replaced with the term "knob".

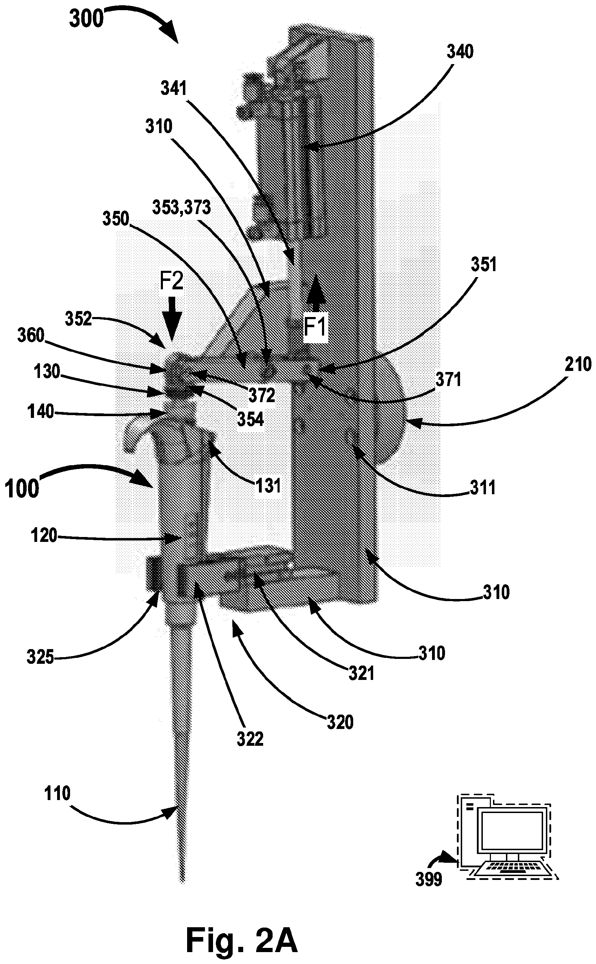

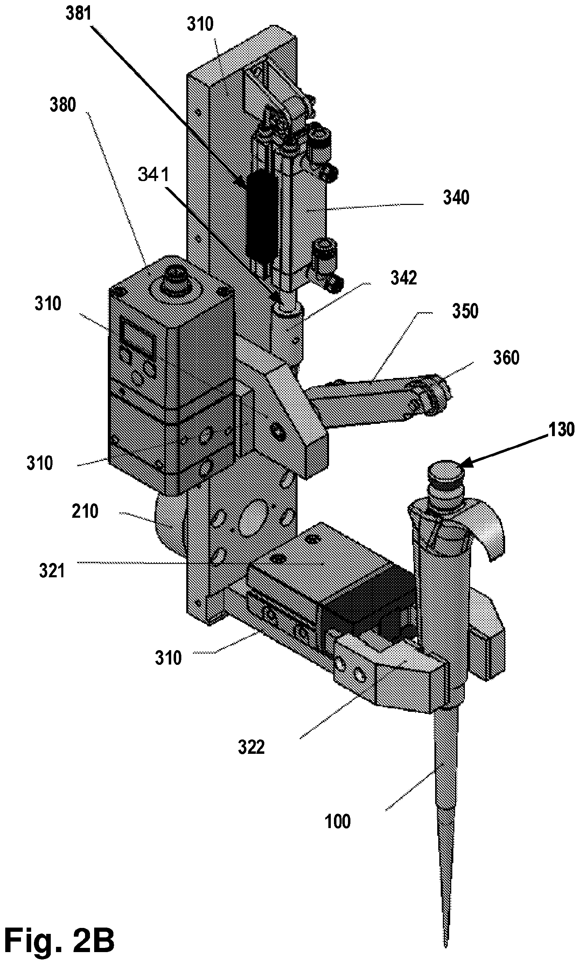

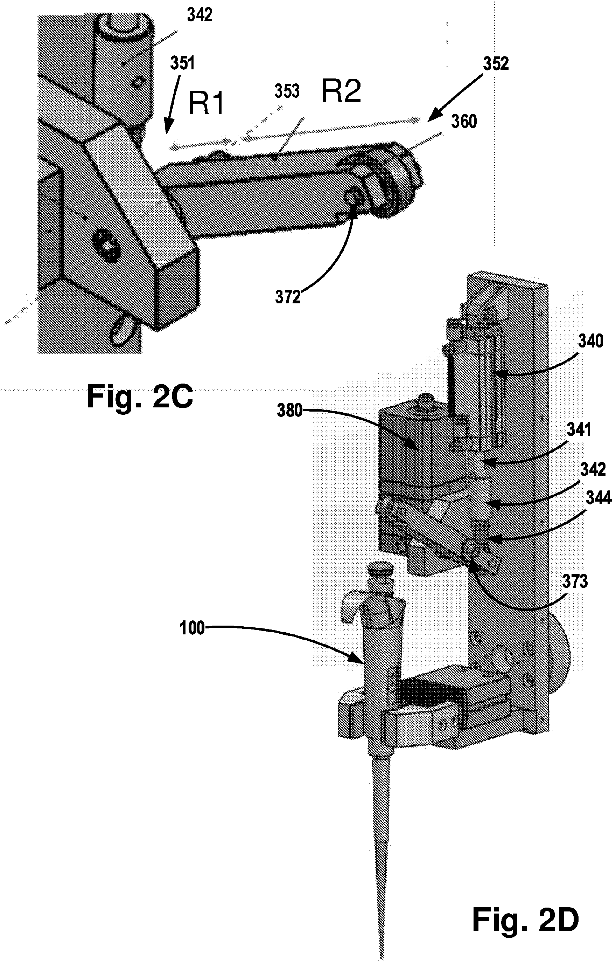

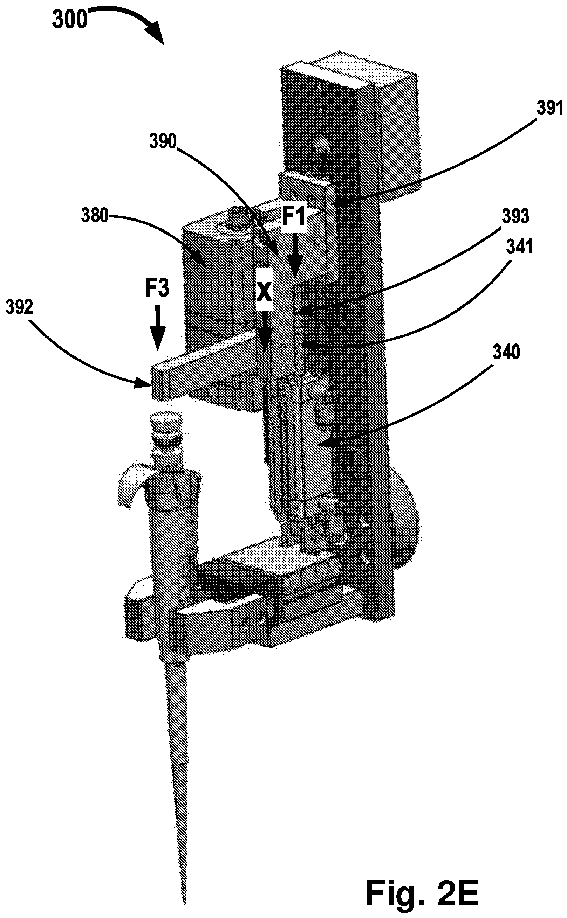

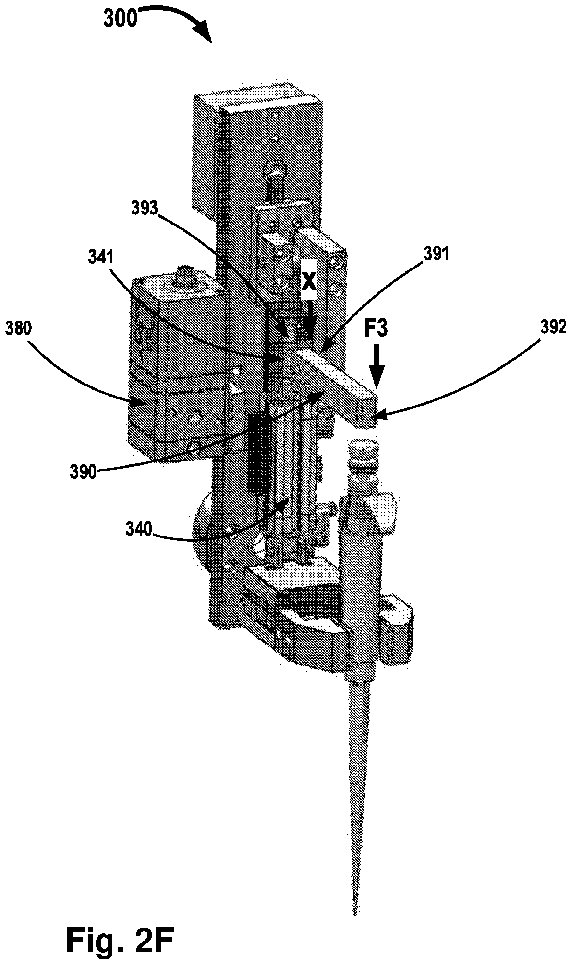

Reference is now made to **Figs. 2A****,** **2B****,** **2C, 2D****,** **2E** and **2F****,** which schematically demonstrate a new pressing-device 300 configured to push a plunger-button 130 of a pipette, according to some embodiments of the invention, while the pipette is being held firmly.

According to some embodiments, the pressing-device 300 comprises:
- a firm base 310,
- a linear actuating-device 340 firmly connected to the base, and configured to provide linear motion and a force (F1), both in the same direction, via its actuating-lever 341;
- a pressing-lever 350, connected at a proximal-section thereof 351 to the actuating-lever 341, via an axis-pin 371, and optionally via a connector 344; the pressing-lever is configured to temporarily communicate, via a distal-section thereof 352, with the plunger-button and therefore apply a force (F2) on the plunger-button; wherein the pressing-lever is connected to the firm base, via an axis-pin 373, at a predetermined location of the pressing-lever 353, configured to provide a predetermined relation between the force (F1) applied at the proximal section and the force (F2) applied at the distal section 352.

According to some embodiments, the force (F2) is provided by the linear actuating-device, according to the equivalent force moments, M = F1×R1 = F2×R2, therefore the relation is F2 = F1 × R1/R2. According to some embodiments, R1 is the distance between the proximal-section 351 and the predetermined location 353 and R2 is the distance between the distal-section 352 and the predetermined location 353, as demonstrated in Fig. 2C.

According to some embodiments, and as demonstrated in Figs. 2E and 2F (two views), the pressing-device 300 comprises:
- a firm base 310,
- a linear actuating-device 340 firmly connected to the base, and configured to provide linear motion and a force (F1), both in the same direction, via its actuating-lever 341;
- a pressing-lever 390, firmly connected at a proximal-section thereof 391 to the actuating-lever 341 ; the pressing-lever is configured to temporarily communicate, via a distal-section thereof 392, with the plunger-button and therefore apply a force on the plunger-button.

According to some embodiments, and as demonstrated in Figs. 2E and 2F, at least one spring 393 is provided to control and/or restrain the motion of the actuating-lever 341. According to some embodiments, the force (F3) applied onto the plugger-button depends on the spring's stiffness coefficient (*k*)*,* F3 = F1 - *k x;* where (*x*) is the spring's deformation length, due to the motion of the actuating-lever 341.

According to some embodiments, the pipette is being firmly held by a third party. According to some embodiments, the pipette is being firmly held by the firm base of the pressing-device, optionally via a gripping element.

According to some embodiments, the plunger button applied force F2 or F3 is configured to push the plunger's button towards the plunger, and where the third party or the griping-device, which is connected to the firm base, provides the reaction force to the applied F2 or F3.

According to some embodiment, the linear actuating-device is selected from: linear motion engine, linear servomotor, linear actuator, servo actuator.

According to some embodiments, the distal-section of the pressing-lever 352 or 392 further comprises a wheel 360 or a ball in a socket, via an axis pin 372, configured for the temporary communication of the pressing-lever with the plunger-button. Accordingly, the wheel is configured to apply the force F2 or F3 on to the plunger-button 130. The wheel is configured to allow a motion to the contact point 354 between the pressing-lever's distal section and the plunger-button. Accordingly, for the case of pressing-lever 350 (demonstrated in Figs. 2A-2D), R1 is the distance between the axis pin at the proximal-section 371 and the axis pin at the predetermined location 373; and R2 is the distance between the axis pin 372 at the distal-section and the axis pin the predetermined location 373.

According to some embodiments, the linear actuating-lever 341 comprises a piston-spacer 342, configured to reduce the amplitude of the actuating-lever's motion.

According to some embodiments, the pressing device is configured to be firmly connected to a robotic arm 200, as an end effector 210 thereof.

According to some embodiments, the pressing-device further comprises at least one processor 399, configured to control the actuating-device, via a wired- and/or wireless- communication.

According to some embodiments, the linear actuating-device 340 further comprises an analog location tracker 381, in wired and/or wireless communication with the processor, configured to measure the motion of the actuating-lever, optionally its current length and/or location.

According to some embodiments, the pressing-device further comprising a pressure regulator 380, in wired and/or wireless communication with the processor, configured to measure and control the force (F1), applied via the actuating-device 340 on the actuating-lever 341.

According to some embodiments, the pressure regulator 380 is configured to control the actuating-device applied force (F1) and thereby control the force (F2 or F3), which is configured to push the plunger-button to a first stop and/or a second stop thereof. According to some embodiments, the first stop of a plunger-button is configured to allow the drawing of liquid into the pipette vessel and the second stop is configured to allow a dispensing of liquid out of the pipette vessel.

According to some embodiments, the control of the actuating-device is based on input data provided to the processor 399 from at least one of: the pressure regulator 380, analog location tracker 381, and any combination thereof

According to some embodiments, the force applied onto the plunger button (F2 or F3) is selected between: 0 to 11 *Kg*. According to some embodiments, the resolution of the applied force (F2 or F3) is selected between: 0.001 to 0.5 *Kg.*

According to some embodiments, the pressing-device further comprising a gripping-device 320, firmly connected to the firm base and configured to firmly and temporarily hold the pipette. According to some embodiments, the griping-device comprises at least one of:
- jaws or claws 322, configured grasp by direct impact upon pipette; in certain embodiments the jaws or claws comprise rubber or another elastic material 325 configured to at least partially adjust to the shape of the pipette being held;
- at least one attraction-element configured to temporarily provide attraction forces applied to the pipette surface, forces selected from: vacuum, magneto-adhesion, or electro-adhesion;
- at least one adhesion-element configured to be temporarily attached to the pipette by: a glue or surface tension; and
- any combination thereof.

According to some embodiments, the processor/s 399 is/are further configured to control the gripping-device 320, via wired- and/or wireless- communication.

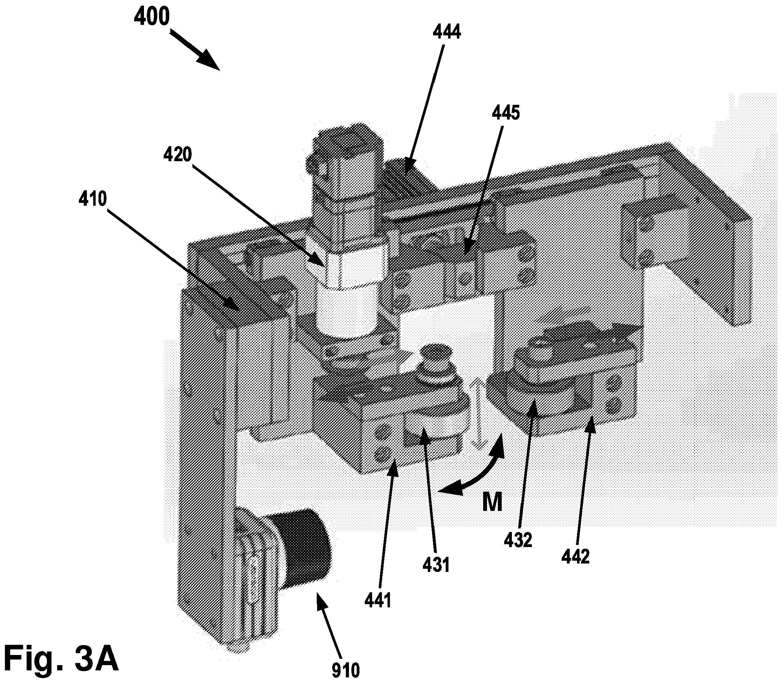

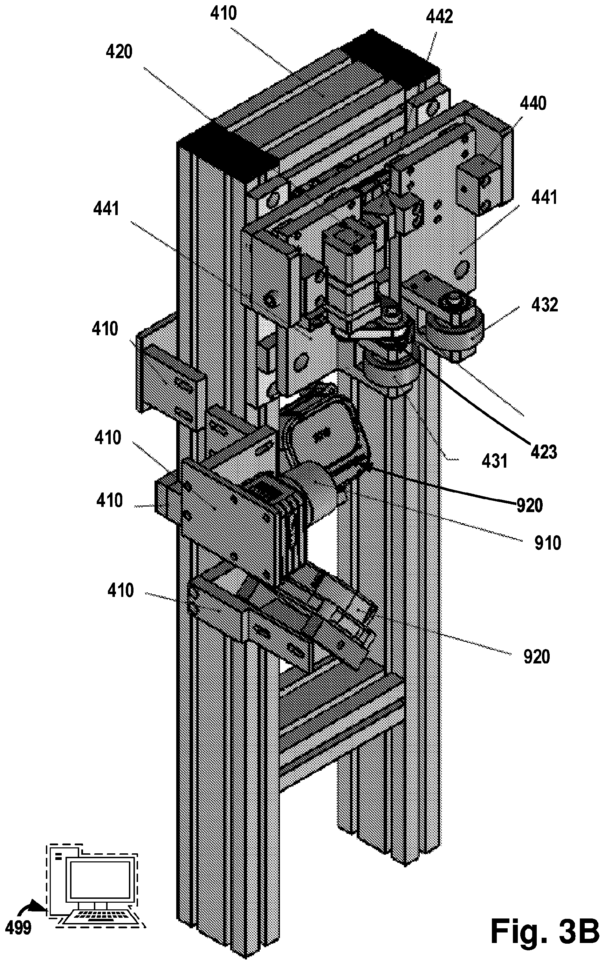

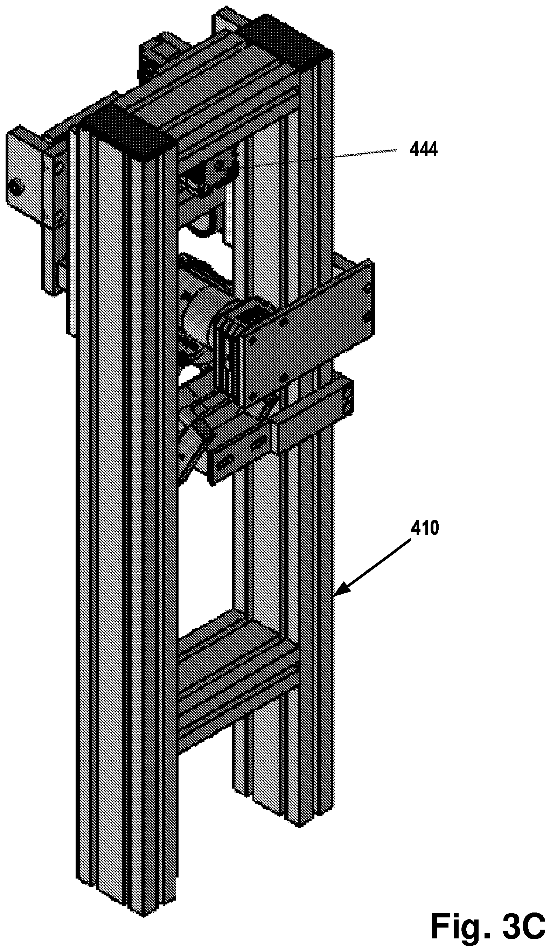

Reference is now made to **Figs. 3A****,** **3B****,** and **3C****,** which schematically demonstrate a new rotating-device 400, configured to turn or to dial a wheel-button 140 of a pipette 100, according to some embodiments of the invention, while the pipette is being held firmly. The rotating-device comprising:
- a firm base 410;
- a rotary-motor 420, configured to provide a rotary motion and force moment (M);
- at least one first-wheel 431, in rotary communication with the rotary-motor, configured to apply the moment (M) onto the wheel-button and turn or dial the wheel-button, and therefore configured to adjust the volume of the pipette; in certain embodiments, the moment (M) is provided by the rotary motor to the first wheel, via a timing belt 423 located on its axis, as demonstrated in **Fig. 3B****;**
- a coupling-assembly 440 mounted via a rail on the firm base, configured to carry the rotary-motor and the first-wheel and to couple the first-wheel to the wheel-button and/or to separate the first-wheel from the wheel-button, and therefore to control the application of the moment (M) onto the wheel-button.

According to some embodiments, the turn or dial the wheel-button is configured to modify the volume of the pipette vessel.

According to some embodiments, the pipette is being firmly held by a third party, optionally via a gripping element. According to some embodiments, the pipette is being firmly held by the firm base of the rotating-device, optionally via a gripping element, similar to the above mentioned gripping-device.

According to some embodiments, the coupling assembly allows a linear motion to the first-wheel in a direction which is perpendicular to its axis, as demonstrated in Fig. 3A with red and blue arrows. Accordingly, the coupling assembly allows the motion of the first wheel towards (*red arrow*) the wheel-button and/or away (*blue arrow*) from the wheel-button, and thereby the application-and/or removal- of the force moment respectively onto- and/or off- the wheel-button of the pipette. According to some embodiments, a compression force is applied onto the wheel-button (*in the direction of the red arrows*), applied by the motion of the coupling device, via the first wheel, from one side and resisted by the gripping element from the other side, such that the force moment (M) can be applied onto the wheel-button, by the rotary-motor, if activated.

According to some embodiments, the application and/or removal of the force moment respectively onto- and/or off- the wheel-button of the pipette can be controlled be by respectively an activation- and/or deactivation- of the rotary-motor.

According to some embodiments, the coupling-assembly comprises two opposing-sections, both mounted via the rail of the firm base, the first-section 441 is configured to carry the rotary-motor and at least one first-wheel, and the second-section 442 is configured to carry at least one second-wheel 432; and wherein the coupling-assembly is configured to couple both the first-wheel and the second-wheel from two sides of the wheel-button of the pipette.

According to some embodiments, the first-wheel is coupled to the rotary motor (therefore active-wheel) and the second-wheel 432 is a free rolling wheel (therefore passive-wheel), which is not connected to any actuator, but can roll by any coupled force and/or moment. According to other embodiments, both the first- and second- wheels are coupled to the rotary motor (active wheels).

**Fig. 3A** demonstrates that the coupling assembly allows the motion of the first- and second-wheels towards (*red arrows*) the wheel-button and/or away (blue arrows) from the wheel-button, and thereby the coupling and/or removal of the first- and second- wheels with- or from- the wheel-button of the pipette, respectively.

According to some embodiments, the coupling-assembly further comprises a compression-spring configured to bring the two opposing-sections 441,442 one towards the other, and therefore to apply a compression-force (*in the direction of the red arrows*) onto the wheel-button, via the first- and second- wheels, such that the force moment can be applied by the rotary-motor, if activated.

According to some embodiments, when the compression-force is applied, the first-wheel rotates the wheel-button; and the wheel-button rotates the second-wheel. According to other embodiments, both the first- and second- wheels rotate the wheel-button.

According to some embodiments, the coupling assembly further comprises a piston 444 which includes a piston-lever 445, as demonstrated in **Fig. 3A****.** The piston-lever is located between the two opposing-sections 441,442, configured to separate the two opposing-sections, when the piston-lever protrudes out of the piston, and thereby release their coupling and the compression force, and stop the rotation or dialing of the wheel-button.

According to some embodiments, the first-wheel and/or the second-wheel are mounted to the coupling-assembly via a spring/s, configured to allow motion along the axis of the wheel/s. This motion along the wheel/s axis is configured to allow the wheel/s to move together with the wheel-button, when rotated/dialed and moving up/down relative to the pipette, as demonstrated in **Fig. 3A** with a green arrow.

According to some embodiments, the first-wheel and/or the second-wheel comprises rubber or another elastic material configured to at least partially adjust to the shape of the wheel-button being coupled

According to some embodiments, the rotating-device further comprises at least one processor 499, configured to control via wired- and/or wireless- communication at least one of: the rotary-motor, the coupling-assembly, the gripping element, and any combination thereof; therefore, to control the rotation/dialing of the wheel-button.

According to some embodiments, the rotating-device further comprises a least one imaging-sensor 910, for example cameras at various locations. According to some embodiments, the least one imaging-sensor is in wired- and/or wireless- communication with the processor, configured to image and analyze the digits of a volume indicator 120 of the pipette (for a non-limiting example 4 to 6 digits) and optionally its indicated measuring unit.

According to some embodiments, the processor is further configured to analyze the provided image (digits and units) and to control the rotation of the wheel-button, based on the analyzed image, to a predetermined volume value.

According to some embodiments, the rotating-device further comprises an illumination element 920, configured to illuminate the volume indicator. According to some embodiment, the illumination element is configured with a location, orientation and intensity to provide optimal illumination condition to the display of the volume indicator.

According to some embodiments, the illumination element is in wired- and/or wireless-communication with the processor, and wherein the processor is further configured to analyze the provided image and to control the illumination element, based on the analyzed image.

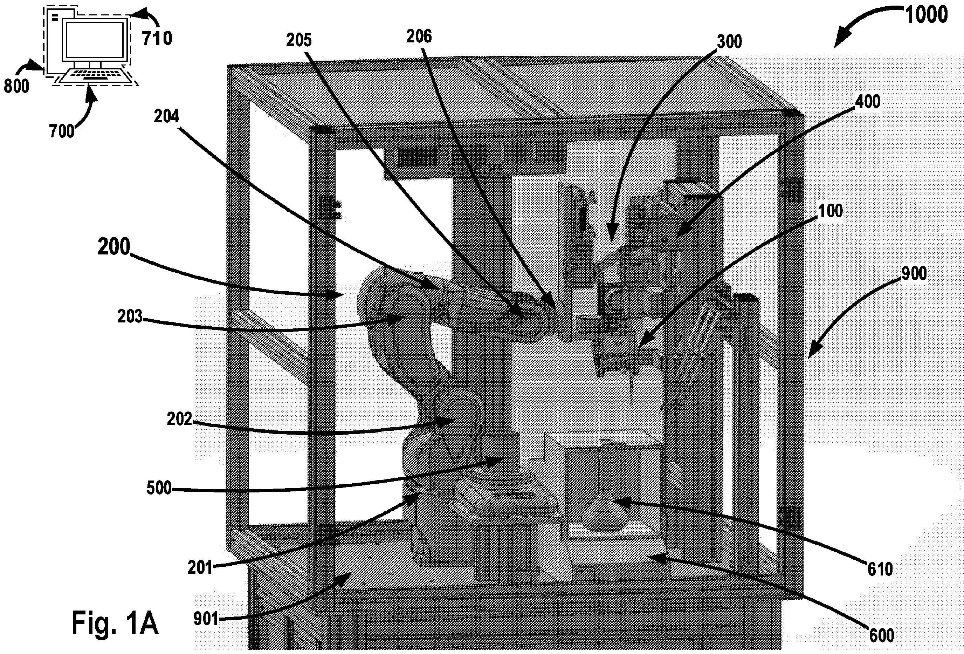

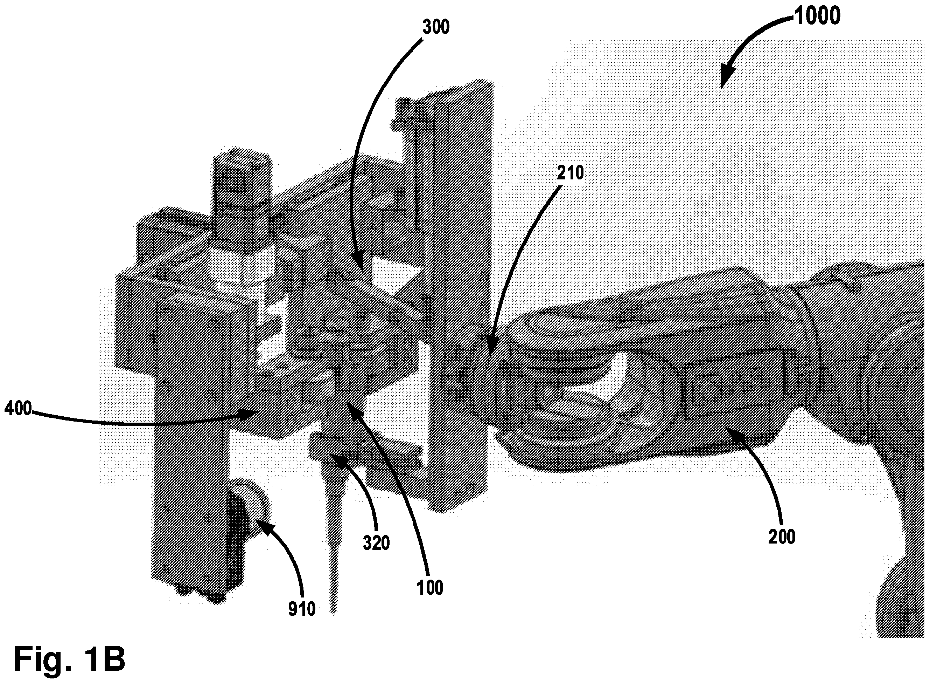

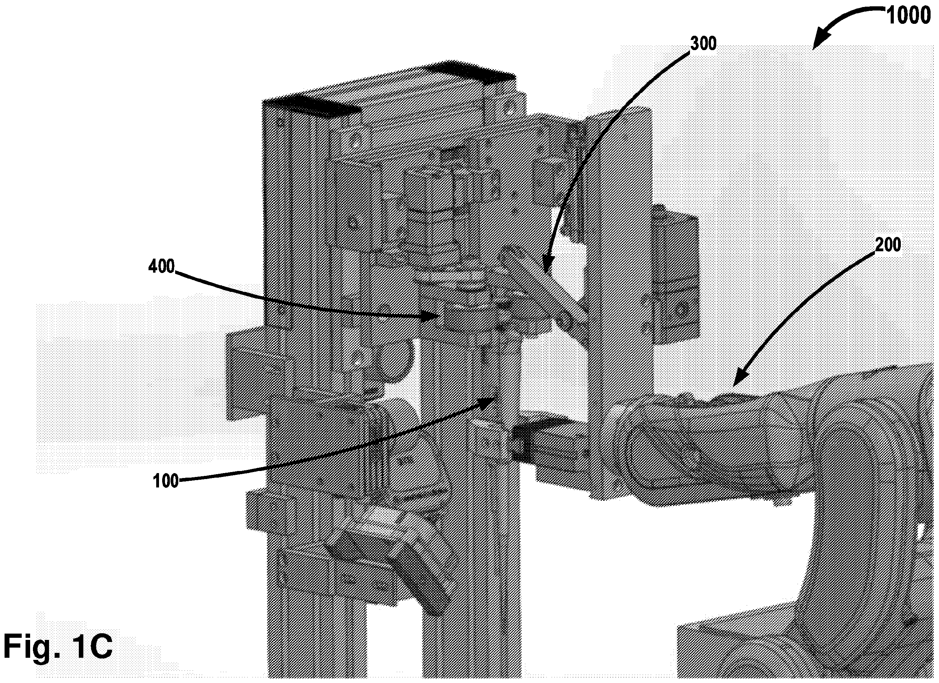

Reference is now made to **Figs. 1A****,** **1B****,** and **1C****,** which schematically demonstrate a new system 1000, configured to automatically calibrate a pipette 100 to a reference standard, according to some embodiments of the invention. The system 1000 comprising:
- a robotic arm 200, configured to translate and rotate its end effector 210;
- a pressing-device 300, according to at least some of the above mentioned embodiments, firmly connected to the robotic arm, to serve as its end effector, the pressing device configured to firmly hold a pipette and to press a plunger-button 130 of the pipette, and thereby control intake and/or disposal of liquid into- and/or out of- the pipette's vessel;
- a rotating-device 400, according to at least some of the above mentioned embodiments, configured to rotate and/or dial a wheel-button 140 of the pipette, and thereby to control and adjust the volume of the pipette's vessel, and thereby the intake of the pipette;
- at least one liquid source 500; optionally a controlled liquid source, for non-limiting examples: a connection to a liquid source, controlled water quality and/or temperature;
- at least one scaling element 600, configured to measure weight, optionally via a container 610;
- at least one input-device 700, configured to receive real-time input-data; and
- at least one processor 399,499,800, in wired- and/or wireless- communication with the input-device configured to analyze the input-data and accordingly to:
   ▪ control the motion of the robotic arm, therefore control location and orientation of the pipette, and optionally enable loading the pipette with a tip 110;
   ▪ control the rotating-device, therefore control a rotation angle / dialing applied onto the wheel-button and therefore set plunger's intake volume; in certain embodiments, the controlling is based on analyzed data from the image sensor, including currently displayed digits and their measurements unit;
   ▪ control the pressing-device, therefore:
      o control pressure applied onto the plunger-button, and therefore control the actions of intaking and disposing of liquid to and from the pipette's vessel, and
      o control the gripping and release of the pipette, via the gripping-device 320;
   ▪ evaluate calibration of the pipette, in reference to a chosen standard; and
   ▪ output a calibration report for the pipette.

According to some embodiments, the system is provided on a stable table 901, configured to stand still in a direction perpendicular to the gravitational axis; optionally where at least some of the processors are remotely provided (not on the table). According to some embodiments the system is provided within a closed cabin 900, to enable the control of environmental conditions. In certain embodiments, the cabin comprises the stable table, as demonstrated in **Fig. 1A****.** In certain embodiments, at least some of the processors are remotely provided, outside of the cabin. In certain embodiments, the cabin is at least partially transparent, to allow visual view of the system.

According to some embodiments, the processor's evaluation of the calibration comprises a determination of the deviation of the pipette's features from a standard so as to ascertain the proper correction factors. According to some embodiments, the standard can be predetermined, taken from known establishments (for a non-limiting example ISO 8655), and/or determined in real-time, according to user's selection.

According to some embodiments, the processor's output of the calibration comprises phrases such as: Pass, Fail, need Adjustment, Check for mechanical malfunction, and combination thereof. According to some embodiments the output report further comprises current status of the tested pipette, such as: the sensors measured features (temperate, humidity, barometric pressure, the average of the weight measurement). According to some embodiments, the processor is configured to record various parameters of the system, it's devices, and/or the cabin features, such as but not limited to: the applied pressure onto the plunger button (for filling the pipette tip and ejecting the liquid out), and required moment for rotating the wheel-button (for changing pipette's volume).

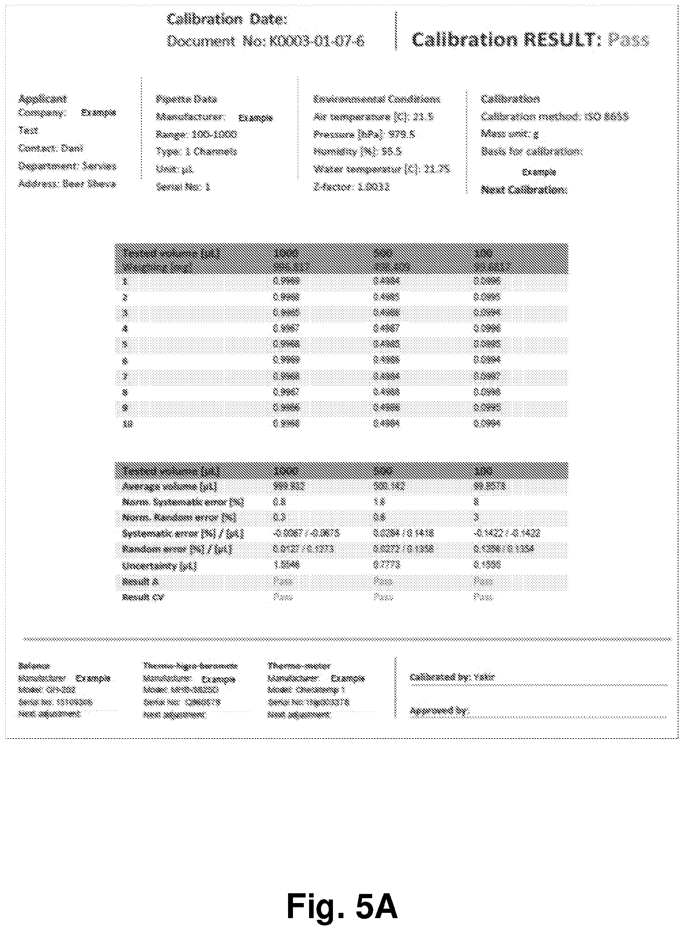

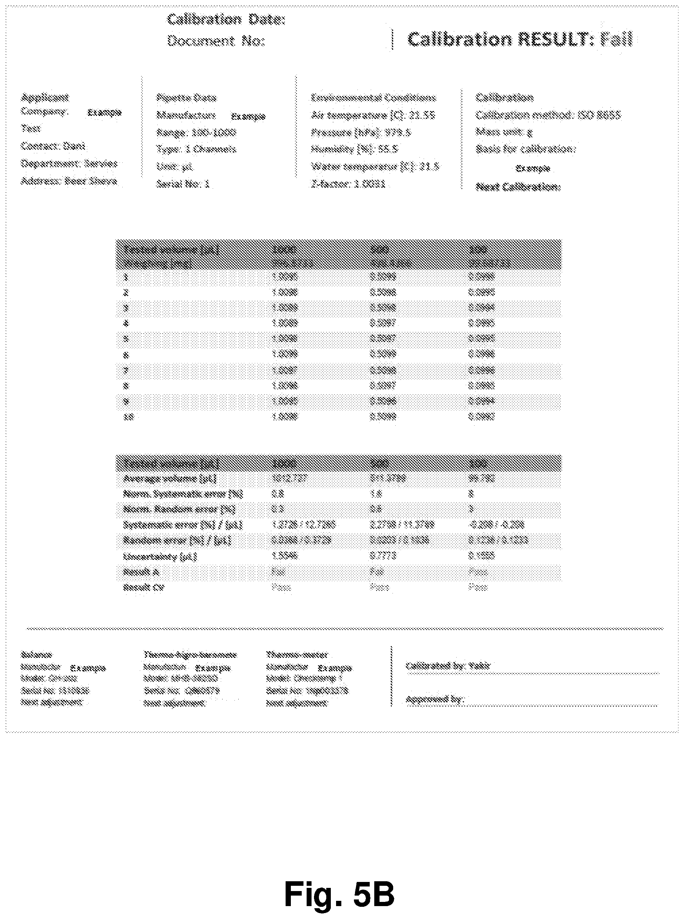

Non-limited examples for calibration reports are provided in: **Fig. SA** for a positive result and **Fig. 5B** for a negative result, according to some embodiments of the invention.

According to some embodiments, the robotic arm comprises at least four rotational degrees of freedom (DOF) 201-206.

According to some embodiments, the input-device comprises at least one of: a keyboard (for manual input), a scanner (for bar-code and/or Q-code), a touch screen, a microphone (for voice recognition), a camera, a temperature sensor, a humidity sensor, a illumination sensor, a water density sensor, a sensor which determines the liquid quantity at the liquid source, an atmospheric pressure sensor, the scaling element, and any combination thereof, configured to collect data about the pipette features and/or the systems features.

According to some embodiments, input-device comprises at least one imaging-sensor 910, configured to take image/s of the pipette. According to some embodiments, the processor/s is/are further configured to evaluate a required rotation-angle or dialing, based on a received and analyzed image of the digits of the volume indicator 120, and optionally an indicated measuring unit.

According to some embodiments, the system further comprises at least one illumination element 920, configured to illuminate at least the volume indicator of the pipette. According to some embodiments, the input-device comprises at least one illumination sensor; and wherein the processor is further configured to accordingly control the illumination element, for a non-limiting example: turn on, turn off, adjust illumination intensity and/or color, adjust the orientation of the illumination element, and more.

According to some embodiments, the system further comprises at least one temperature control device, configured to adjust the cabin temperature and/or the liquid temperature in the liquid source; the input-device comprises at least one temperature sensor; and the processor is further configured to control the temperature control device to a predetermined temperature.

According to some embodiments, the system further comprises at least one humidity control device, configured to adjust the cabin's humidity; the input-device comprises at least one humidity sensor; and the processor is further configured to control the humidity control device to a predetermined humidity.

According to some embodiments, the input-data comprises at least one of:
- at least one reference standard, to be provided as the predetermined standard;
- identification data of the pipette, for a non-limiting example: manufacture, model, buttons location, plunger/vessel volume range, volume indicator's units, and more;
- at least one image of the pipette, received from an imaging sensor;
- at least one real-time image of the pipette's volume indicator (for example digits and measurement units), received from an imaging sensor;
- real-time illumination intensity, received from an illumination sensor;
- real-time cabin's temperature, received from a temperature sensor;
- real-time liquid temperature in the liquid source, received from a temperature sensor;
- real-time cabin's humidity, received from a humidity sensor;
- real-time location and orientation of the pipette, received from a processor of the robotic arm;
- real-time liquid weight, received from the scaling element;
- real-time atmospheric pressure measurement;
- real-time water density;
- calculated Z factor, (which is a known measure of statistical effect size); and
- any combination thereof.

According to some embodiments, the system comprises at least one display device 710 and/or a printing device, configured to display the input data and/or the calibration report.

According to some embodiments, the plunger-button and the wheel-button are configured as a single button, that can be both pushed and rotated or dialed.

According to some embodiments, the system is configured to sequentially calibrate plurality of pipettes, one after the other, by collecting each pipette from a known location, calibrating each pipette, according to at least some of the above mentioned embodiments, returning the pipette to its original location or to another predetermined location, and then moving to collect the following pipette.

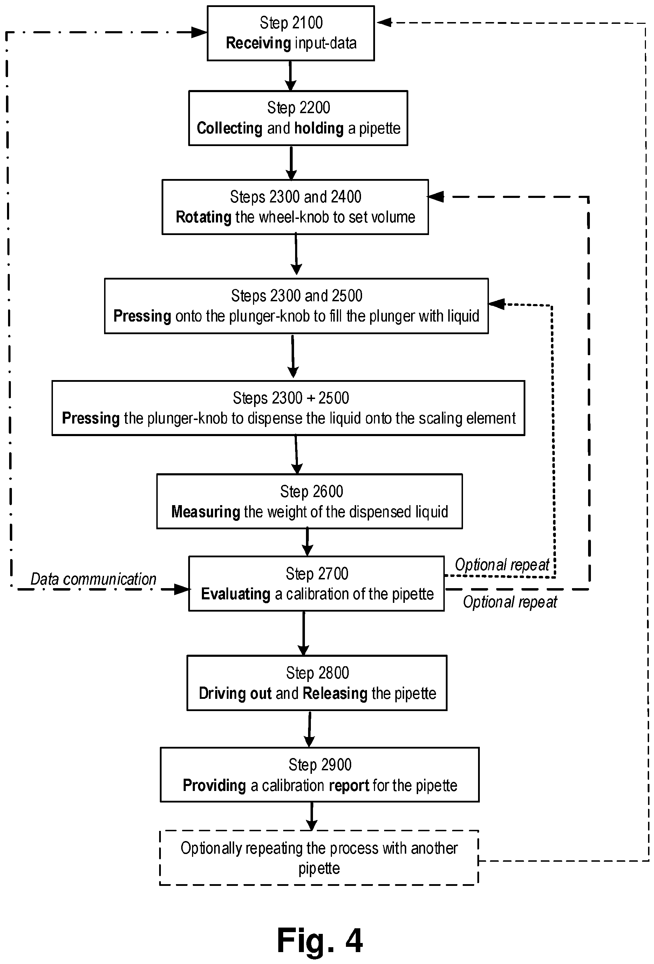

Reference is now made to **Fig. 4****,** which schematically demonstrates a new method for automatic calibration of at least one pipette, using the system according to at least some of the above mentioned embodiments. The method comprising steps of:
- receiving the input-data 2100, via the at least one input-device;
- collecting from a collection station and firmly holding a pipette 2200, via the robotic arm and the gripping-device;
- moving the pipette to a predetermined location and/or orientation 2300, via the robotic arm; for a non-limiting example, towards at least one of: the rotating-device, the liquid source, the scaling element, the returning location, and more; according to some embodiments the processor is configured for calculating current liquid surface line based on its initial volume and dimensions and the previous intakes, and/or based on its current weight, and accordingly control the moving of the pipette into the liquid source such that it is immersed/dipped to a predetermined depth.
- applying a predetermined rotation angle onto a wheel-button of the pipette 2400, via the rotating-device;
- applying a predetermined pressure onto a plunger-button of the pipette 2500, via the pressing-device; for a non-limiting example, apply pressure to a first stop to draw liquid from the liquid source and/or to apply pressure to a second stop to dispense the liquid within the plunger/vessel onto the scaling element;
- measuring liquid weight 2600, via the scaling element;
- evaluating a calibration of the pipette 2700, in reference to a predetermined standard, via the processor; and
- driving out and releasing the pipette 2800, via the robotic arm the gripping-device;
- providing a calibration report for the pipette 2900, via the processor.

According to some embodiments, the step of moving the pipette to a predetermined location and/or orientation 2300, comprises loading the pipette with a tip.

According to some embodiments, the step of driving out and releasing the pipette 2800, comprises ejecting the tip from the pipette.

According to some embodiments, the steps loading and ejecting the tip can be provided between several measurements of a specific pipette, meaning loading a new tip before the step of measuring and ejecting the use tip, after the measurement.

According to some embodiments, the step 2400 of applying a predetermined rotation angle onto a wheel-button, comprises selecting a liquid volume for the pipette's vessel. According to some embodiments, the step of selecting a liquid volume for the pipette comprises analyzing, via the processor, an image of a volume indicator of the pipette, provided by an imaging sensor. According to some embodiments, the step of applying rotation angle onto a wheel-button is provided several times for several different volumes.

According to some embodiments, the step 2600 of applying a predetermined pressure onto the plunger-button, comprises applying pressure to a first stop for drawing liquid from the liquid source into the pipette. According to some embodiments, the step 2600 of applying a predetermined pressure onto the plunger-button, comprises applying pressure to a second stop for dispensing the liquid from the pipette onto the scaling element, or onto a container there onto the scaling element.

According to some embodiments, the method further comprising at least one step selected from:
- controlling temperature of the cabin and/or of the liquid in the liquid source, via at least one temperature sensor and at least one temperature control device;
- controlling humidity of the cabin, via at least one humidity sensor, and at least one humidity control device;
- controlling the illumination onto a volume indicator of the pipette, via at least one illumination sensor and at least one illumination element;
- the pipette via an ultra violet radiation device;
- selecting a tip to be applied onto the pipette, according to the type of the pipette and its task;
- collecting and applying a tip onto the pipette, via the robotic arm;
- ejecting the tip from the pipette;
- removing used liquid from the container;
- displaying the input data and/or the calibration report, via the displaying-device and/or via the printing device; and
- and any combination thereof.

According to some embodiments, the step 2900 of driving out the pipette to a predetermined location, is not necessarily to its original collection point, but to a different location.

According to some embodiments, and as demonstrated in Fig. 4, the steps of drawing, dispensing and measuring, are optionally repeated in cycles, for a predetermined number of times, and optionally per several predetermined selected liquid volumes; and wherein the step of evaluating is based on a selected collection of the repeated cycles. According to some embodiments, the selecting of the collection of cycles, is based on statistic tools selected from: z factor, standard deviation, measurement random error, measurement uncertainty, etc.

## Claims

1. A system (1000) configured to automatically calibrate a pipette, the system comprising:
- a robotic arm (200), configured to translate and rotate its end effector (210);
- a pressing-device (300) firmly connected to the robotic arm, to serve as its end effector, the pressing device configured to hold a pipette and to press a plunger-button of the pipette;
- a rotating-device (400), configured to rotate/dial a wheel-button of the pipette;
- at least one liquid source (500);
- at least one scaling element (600), configured to measure weight;
- at least one input-device (700), configured to receive real-time input-data; and
- at least one processor (399,499,800), in communication with the input-device configured to analyze the input-data and accordingly to:
▪ control the motion of the robotic arm, therefore control location and orientation of the pipette;
▪ control the rotating-device, therefore control a rotation angle / dialing applied onto the wheel-button;
▪ control the pressing-device, therefore control pressure applied onto the plunger-button and control the gripping and release of the pipette;
▪ evaluate calibration of the pipette, in reference to a predetermined standard; and
▪ output a calibration report for the pipette.

2. The system of claim 1, wherein the system is provided within a closed cabin (900), with an optional exception of at least some of the processors; the cabin is configured to enable environment control there within.

3. The system of any one of claims 1 to 2, wherein at least one of the following holds true:
- the robotic arm comprises at least four rotational degrees of freedom.
- the input-device comprises at least one of: a keyboard, a scanner, a touch screen, a microphone, a camera, a temperature sensor, a humidity sensor, a illumination sensor, a water density sensor, a sensor which determines the liquid quantity at the liquid source, the scaling element, an atmospheric pressure sensor" and any combination thereof, configured to collect data about the pipette features and/or the systems features;
- the system further comprises at least one display device, configured to display the input data and/or the calibration report;
- the plunger-button and the wheel-button are configured as a single button; and
- the report comprising selected from: pass, fail, need adjustment, check for mechanical malfunction, and any combination thereof.

4. The system of any one of claims 1 to 3, wherein the input-device comprises at least one imaging-sensor, configured to take image/s of the pipette.

5. The system of claim 4, wherein the processor is further configured to evaluate a required rotation-angle or dialing, based on a received and analyzed image of digits of a volume indicator and optionally an indicated measuring unit.

6. The system of any one of claims 1 to 5, wherein at least one of the following holds true:
- the system further comprising at least one temperature control device, configured to adjust the cabin's temperature and/or the liquid's temperature in the liquid source; the input-device comprises at least one temperature sensor; and the processor is further configured to control the temperature control device to a predetermined temperature;
- the system further comprising at least one humidity control device, configured to adjust the cabin's humidity; the input-device comprises at least one humidity sensor; and the processor is further configured to control the humidity control device to a predetermined humidity.

7. The system of any one of claims 1 to 6, wherein the input-data comprises at least one of:
- at least one reference standard, to be provided as the predetermined standard;
- identification data of the pipette;
- at least one image of the pipette, received from an imaging sensor;
- at least one current image of the pipette's volume indicator, received from an imaging sensor;
- current illumination intensity, received from an illumination sensor;
- current cabin's temperature, received from a temperature sensor;
- current liquid temperature in the liquid source, received from a temperature sensor;
- current cabin's humidity, received from a humidity sensor;
- current location and orientation of the pipette, received from a processor of the robotic arm;
- current liquid weight, received from the scaling element;
- current atmospheric pressure;
- Calculated Z factor;
- current water density; and
- any combination thereof.

8. The system of claim of any one of claims 1 to 7, wherein the rotating-device (400) is configured to turn/dial a button of a pipette, and comprising:
- a firm base (410);
- a rotary-motor (420), configured to provide a rotary motion and moment;
- at least one active-wheel (431), in rotary communication with the rotary-motor, configured to apply the moment onto the button and turn/dial the button; and
- a coupling-assembly (440) mounted via a rail on the base, configured to carry the rotary-motor and at least one of the active-wheels and to couple the active-wheel/s to the button and/or to separate the active-wheel/s from the button, and therefore to control the application of the moment onto the button;
wherein the coupling-assembly comprises two opposing-sections, the first-section is configured to carry the rotary-motor and at least one of the active-wheels, and the second-section is configured to carry another active-wheel or a passive-wheel, and wherein the coupling-assembly is configured to couple all the wheels from two sides of the button.

9. The system of claim 8, wherein the coupling-assembly further comprises a compression-spring configured to bring the two opposing-sections one towards the other, and therefore to apply a compression-force onto the button.

10. The system of any one of claims 8 to 9, wherein the coupling assembly further comprises a piston comprising a piston-lever; the piston-lever located between the two opposing-sections, configured to separate the two opposing-sections, when the piston-lever protrudes out of the piston.

11. The system of any one of claims 8 to 10, wherein at least one of the following holds true:
- the active-wheel and/or the passive-wheel is mounted to the coupling-assembly via a spring/s, configured to allow motion along the axis of the wheel/s;
- the active-wheel and/or the passive-wheel comprises rubber;
- further comprising at least one processor configured to control the rotary-motor and/or the coupling-assembly, therefore to control the rotation/dialing of the button;
- further comprising a least one imaging-sensor, in communication with the processor, configured to image digits of a volume indicator of the pipette and optionally its indicated measuring unit, and optionally wherein the processor is further configured to analyze the provided image and to control the rotation of the button, based on the analyzed image, to a predetermined value;
- further comprising illumination element, configured to illuminate the volume indicator;
- further comprising a gripping-device, firmly connected to the firm base and configured to firmly and temporarily hold the pipette.

12. A method for automatic calibration of at least one pipette using the system according to any one of claims 1 to 11, the method comprising:
- receiving the input-data, via the at least one input-device;
- holding and/or releasing a pipette, via the pressing-device;
- moving the pipette to a predetermined location and/or orientation, via the robotic arm;
- applying a predetermined rotation angle onto a wheel-button of the pipette, via the rotating-device;
- applying a predetermined pressure onto a plunger-button of the pipette, via the pressing-device;
- measuring liquid weight, via the scaling element;
- evaluating a calibration of the pipette, in reference to a predetermined standard, via the processor; and
- providing a calibration report for the pipette, via the processor and a display device.

13. The method of claim 12, wherein the step applying a predetermined rotation angle onto a wheel-button, comprises selecting a liquid volume for the pipette.

14. The method of claim 13, wherein the step of selecting a liquid volume for the pipette comprises analyzing, via the processor, an image of a volume indicator of the pipette, provided by an imaging sensor.

15. The method of any one of claims 12 to 14, wherein the step of applying a predetermined pressure onto the plunger-button, comprises drawing liquid from the liquid source into the pipette; and/or dispensing the liquid from the pipette onto the scaling element.

## Patentansprüche

1. System (1000), das dazu konfiguriert ist, eine Pipette automatisch zu kalibrieren, wobei das System wie folgt umfasst:
- einen Roboterarm (200), der dazu konfiguriert ist, einen Endeffektor (210) desselben zu translatieren und zu drehen;
- eine Pressvorrichtung (300), die fest mit dem Roboterarm verbunden ist, um demselben als dessen Endeffektor zu dienen, wobei die Pressvorrichtung dazu konfiguriert ist, eine Pipette zu halten und auf einen Stempel-Knopf der Pipette zu drücken;
- eine Drehvorrichtung (400), die dazu konfiguriert ist, einen Rad-Knopf der Pipette zu drehen/anzuwählen;
- mindestens eine Flüssigkeitsquelle (500);
- mindestens ein Skalierungselement (600), das dazu konfiguriert ist, Gewicht zu messen;
- mindestens eine Eingangsvorrichtung (700), die dazu konfiguriert ist, Eingangsdaten in Echtzeit zu empfangen; und
- mindestens einen Prozessor (399, 499, 800), der mit der Eingangsvorrichtung in Kommunikation und dazu konfiguriert ist, die Eingangsdaten zu analysieren jeweils dahingehend zum:
• Steuern der Bewegung des Roboterarms, wodurch Ort und Orientierung der Pipette gesteuert werden;
• Steuern der Drehvorrichtung und damit zum Steuern eines Drehwinkels/Anwählens, welcher/s auf den Rad-Knopf ausgeübt wird;
• Steuern der Pressvorrichtung und damit zum Steuern von Druck, der auf den Stempel-Knopf aufgebracht wird und zum Steuern des Greifens und Freigebens der Pipette;
• Evaluieren der Kalibrierung der Pipette mit Bezug auf einen vorbestimmten Standard; und zum
• Ausgeben eines Kalibrierungsberichts für die Pipette.

2. System nach Anspruch 1, wobei das System innerhalb einer geschlossenen Kabine (900) bereitgestellt wird, wovon mindestens manche der Prozessoren wahlweise ausgenommen sind; wobei die Kabine dazu konfiguriert ist, eine Steuern der Umgebungsbedingungen innerhalb derselben zu ermöglichen.

3. System nach einem der Ansprüche 1 bis 2, wobei mindestens eine der folgenden Aussagen zutrifft:
- Der Roboterarm umfasst mindestens vier Rotationsfreiheitsgrade;
- Die Eingangsvorrichtung umfasst mindestens eines von Folgenden: eine Tastatur, einen Scanner, einen Berührungsbildschirm, ein Mikrofon, eine Kamera, einen Temperaturfühler, einen Feuchtigkeitsfühler, einen Beleuchtungssensor, einen Sensor zum Bestimmen der Dichte des Wassers, einen Sensor zum Bestimmen der Flüssigkeitsmenge an der Flüssigkeitsquelle, das Skalierelement, einen Atmosphärendrucksensor und Kombinationen davon, die dazu konfiguriert sind, Daten über die Merkmale der Pipette und/oder des Systems zu erheben;
- Das System umfasst ferner mindestens eine Display-Vorrichtung, die dazu konfiguriert ist, die Eingangsdaten und/oder den Kalibrierungsbericht anzuzeigen;
- Der Stempel-Knopf und der Rad-Knopf sind als ein Einzelknopf konfiguriert, und
- Der Bericht umfasst Elemente, die von Folgendem ausgewählt sind: Bestanden, Nicht-Bestanden, Anpassungsbedürftig, Auf mechanische Fehlfunktion überprüfen und Kombinationen davon.

4. System nach einem der Ansprüche 1 bis 3, wobei die Eingangsvorrichtung mindestens einen Bildgebungssensor umfasst, der dazu konfiguriert ist, ein Bild/Bilder der Pipette aufzunehmen.

5. System nach Anspruch 4, wobei der Prozessor ferner dazu konfiguriert ist, einen erforderlichen Rotationswinkel oder ein Anwählen jeweils basierend auf einem empfangenen und analysierten Abbild von Ziffern eines Volumenanzeigers und wahlweise einer angezeigten Maßeinheit zu evaluieren.

6. System nach einem der Ansprüche 1 bis 5, wobei mindestens eine der folgenden Aussagen zutrifft:
- das System umfasst ferner mindestens eine Temperatursteuervorrichtung, die dazu konfiguriert ist, die Temperatur der Kabine und/oder die Temperatur der Flüssigkeit in der Flüssigkeitsquelle anzupassen; weiter umfasst die Eingangsvorrichtung mindestens einen Temperaturfühler, und der Prozessor ist ferner dazu konfiguriert, die Temperatursteuervorrichtung auf eine vorbestimmte Temperatur zu regeln;
- das System umfasst ferner mindestens eine Feuchtigkeitskontrollvorrichtung, die dazu konfiguriert ist, die Feuchtigkeit der Kabine anzupassen; die Eingangsvorrichtung umfasst mindestens einen Feuchtigkeitsfühler; und der Prozessor ist ferner dazu konfiguriert, die Feuchtigkeitskontrollvorrichtung auf eine vorbestimmte Feuchtigkeit zu regeln.

7. System nach einem der Ansprüche 1 bis 6, wobei die Eingangsdaten mindestens eines hiervon umfassen:
- mindestens einen Referenzstandard, der als der vorbestimmte Standard bereitzustellen ist;
- Daten zur Identifizierung der Pipette;
- mindestens ein Abbild der Pipette, das von einem Bildgebungssensor empfangen wird;
- mindestens ein aktuelles Abbild des Volumenanzeigers der Pipette, das von einem Bildgebungssensor empfangen wird;
- die aktuelle Beleuchtungsintensität, die von einem Beleuchtungssensor empfangen wird;
- die aktuelle Temperatur in der Kabine, die von dem Temperaturfühler empfangen wird;
- die aktuelle Temperatur der Flüssigkeit in der Flüssigkeitsquelle, die von einem Temperaturfühler empfangen wird;
- die aktuelle Feuchtigkeit in der Kabine, die von einem Feuchtigkeitsfühler empfangen wird;
- den aktuellen Ort und die aktuelle Orientierung der Pipette, die von einem Prozessor des Roboterarms empfangen werden;
- das aktuelle Gewicht der Flüssigkeit, das von dem Skalierelement empfangen wird;
- den aktuelle Atmosphärendruck;
- den berechneten Faktor Z;
- die aktuelle Dichte des Wassers; und
- Kombinationen davon.

8. System nach einem der Ansprüche 1 bis 7, wobei die Drehvorrichtung (400) dazu konfiguriert ist, einen Knopf einer Pipette zu drehen/anzuwählen und Folgendes umfassend:
- eine feste Basis (410);
- einen Drehmotor (420), der dazu konfigurier ist, eine Drehbewegung und ein Drehmoment bereitzustellen;
- mindestens ein aktives Rad (431), das in einer Drehkommunikation mit dem Drehmotor ist, das dazu konfiguriert ist, das Moment auf den Knopf aufzubringen und den Knopf zu drehen/anzuwählen; und
- eine Kopplungsbaugruppe (440), die über eine Schiene auf der Basis befestigt ist und dazu konfiguriert ist, den Drehmotor und mindestens eines der aktiven Räder zu tragen und das aktive Rad oder die aktiven Räder mit dem Knopf zu koppeln und/oder das aktive Rad oder die aktiven Räder von dem Knopf zu trennen, um damit die Aufbringung des Moments auf den Knopf zu steuern;
wobei die Kopplungsbaugruppe zwei einander gegenüberliegende Abschnitte umfasst, wobei der erste Abschnitt dazu konfiguriert ist, den Drehmotor und mindestens eines der aktiven Räder zu tragen, und wobei der zweite Abschnitt dazu konfiguriert ist, ein weiteres aktives Rad oder ein passives Rad zu tragen, wobei die Kopplungsbaugruppe dazu konfiguriert ist, sämtliche Räder auf beiden Seiten des Knopfes zu koppeln.

9. System nach Anspruch 8, wobei die Kopplungsbaugruppe ferner eine Kompressionsfeder umfasst, die dazu konfiguriert ist, die beiden einander gegenüberliegenden Abschnitte jeweils den einen dem anderen zu nähern, um eine Kompressionskraft auf den Knopf aufzubringen.

10. System nach einem der Ansprüche 8 bis 9, wobei die Kopplungsbaugruppe ferner einen Kolben umfasst, der einen Kolbenhebel umfasst; wobei der Kolbenhebel zwischen den zwei einander gegenüberliegenden Abschnitten angeordnet und dazu konfiguriert ist, die beiden einander gegenüberliegenden Abschnitte voneinander zu trennen, wenn der Kolbenhebel aus dem Kolben hervorsteht.

11. System nach einem der Ansprüche 8 bis 10, wobei mindestens eine der folgenden Aussagen zutrifft:
- das aktive Rad und/oder das passive Rad ist jeweils über eine Feder oder mehrere Federn mit der Kopplungsbaugruppe befestigt und dazu konfiguriert, eine Bewegung entlang der Achse des Rads oder der Räder zuzulassen;
- das aktive Rad und/oder das passive Rad umfasst/umfassen Gummi;
- ferner umfassend mindestens einen Prozessor, der dazu konfiguriert ist, den Drehmotor und/oder die Kopplungsbaugruppe zu steuern, um damit die Drehung/das Anwählen des Knopfes zu steuern;
- ferner umfassend mindestens einen Bildgebungssensor, der mit dem Prozessor in Kommunikation und dazu konfiguriert ist, die Ziffern eines Volumenanzeigers der Pipette sowie wahlweise dessen angezeigte Maßeinheit abzubilden, und wobei wahlweise ferner zutrifft, dass der Prozessor dazu konfiguriert ist, das bereitgestellte Abbild zu analysieren und die Drehung des Knopfes basierend auf dem analysierten Abbild auf einen vorbestimmten Wert zu regeln;
- ferner umfassend ein Beleuchtungselement, das dazu konfiguriert ist, den Volumenanzeiger zu beleuchten;
- ferner umfassend eine Greifvorrichtung, die fest mit der festen Basis verbunden und dazu konfiguriert ist, die Pipette sicher und zeitweise zu festzuhalten.

12. Verfahren zur automatischen Kalibrierung mindestens einer Pipette, wobei ein System nach einem der Ansprüche 1 bis 11 verwendet wird, wobei das Verfahren wie folgt umfasst:
- Empfangen der Eingangsdaten über die mindestens eine Eingangsvorrichtung;
- Halten und/oder Freigeben einer Pipette über die Pressvorrichtung;
- Bewegen der Pipette an einen vorbestimmten Ort und/oder in eine vorbestimmte Orientierung über den Roboterarm;
- Aufbringen eines vorbestimmten Drehwinkels auf einen Rad-Knopf der Pipette über die Drehvorrichtung;
- Aufbringen eines vorbestimmten Drucks auf einen Stempel-Knopf der Pipette über die Druckvorrichtung;
- Messen des Gewichts der Flüssigkeit über das Skalierelement;
- Evaluieren einer Kalibrierung der Pipette in Bezug auf einen vorbestimmten Standard über den Prozessor; und
- Bereitstellen eines Kalibrierungsberichts für die Pipette über den Prozessor und eine Display-Vorrichtung.

13. Verfahren nach Anspruch 12, wobei der Schritt Aufbringen eines vorbestimmten Drehwinkels auf einen Rad-Knopf Auswählen eines Flüssigkeitsvolumens für die Pipette umfasst.

14. Verfahren nach Anspruch 13, wobei der Schritt Auswählen eines Flüssigkeitsvolumens für die Pipette Analysieren eines Abbilds eines Volumenanzeigers der Pipette, das von einem Bildgebungssensor bereitgestellt wird, über den Prozessor umfasst.

15. Verfahren nach einem der Ansprüche 12 bis 14, wobei der Schritt Aufbringen eines vorbestimmten Drucks auf den Stempel-Knopf Ansaugen von Flüssigkeit aus der Flüssigkeitsquelle in die Pipette umfasst; und/oder Abgeben der Flüssigkeit aus der Pipette auf das Skalierelement.

## Revendications

1. Système (1000) configuré pour étalonner automatiquement une pipette, le système comprenant :
- un bras robotique (200), configuré pour translater et faire tourner son effecteur terminal (210) ;
- un dispositif de pression (300) fermement relié au bras robotique pour lui servir d'effecteur terminal, le dispositif de pression étant configuré pour tenir une pipette et pour appuyer sur un bouton-poussoir de la pipette ;
- un dispositif rotatif (400), configuré pour faire tourner/régler un bouton-roue de la pipette ;
- au moins une source de liquide (500) ;
- au moins un élément de mise à l'échelle (600), configuré pour mesurer le poids ;
- au moins un dispositif d'entrée (700), configuré pour recevoir des données d'entrée en temps réel ; et
- au moins un processeur (399,499,800), en communication avec le dispositif d'entrée, configuré pour analyser les données d'entrée et, par voie de conséquence, pour :
• contrôler le mouvement du bras robotique, et donc contrôler l'emplacement et l'orientation de la pipette ;
• contrôler le dispositif rotatif, et donc contrôler l' angle de rotation/le réglage appliqué sur le bouton-roue ;
• contrôler le dispositif de pression, et donc contrôler la pression appliquée sur le bouton-poussoir et contrôler la préhension et le relâchement de la pipette ;
• évaluer l'étalonnage de la pipette, en référence à une norme prédéterminée ; et
• générer un rapport d'étalonnage pour la pipette.

2. Système selon la revendication 1, dans lequel le système est fourni dans un cabinet fermé (900), à l'exception facultative d'au moins certains des processeurs ; le cabinet étant configuré pour permettre de contrôler l'environnement interne.

3. Système selon l'une quelconque des revendications 1 à 2, dans lequel au moins l'un des éléments suivants est vrai :
- le bras robotique comprend au moins quatre degrés de liberté en rotation,
- le dispositif d'entrée comprend au moins l'un des éléments suivants : un clavier, un scanner, un écran tactile, un microphone, une caméra, un capteur de température, un capteur d'humidité, un capteur d'éclairage, un capteur de densité d'eau, un capteur qui détermine la quantité de liquide au niveau de la source de liquide, l'élément de mise à l'échelle, un capteur de pression atmosphérique et toute combinaison de ceux-ci, configurés pour collecter des données sur les caractéristiques de la pipette et/ou les caractéristiques du système ;
- le système comprend en outre au moins un dispositif d'affichage, configuré pour afficher les données d'entrée et/ou le rapport d'étalonnage ;
- le bouton-poussoir et le bouton-roue sont configurés comme un seul bouton ; et
- le rapport comprend une sélection parmi : réussite, échec, réglage nécessaire, vérification d'une défaillance mécanique, et toute combinaison de ceux-ci.

4. Système selon l'une quelconque des revendications 1 à 3, dans lequel le dispositif d'entrée comprend au moins un capteur d'imagerie, configuré pour prendre une ou plusieurs images de la pipette.

5. Système selon la revendication 4, dans lequel le processeur est en outre configuré pour évaluer un angle de rotation ou un réglage requis, en fonction d'une image reçue et analysée de chiffres d'un indicateur de volume et, facultativement, d'une unité de mesure indiquée.

6. Système selon l'une quelconque des revendications 1 à 5, dans lequel au moins l'un des éléments suivants est vrai :
- le système comprend en outre au moins un dispositif de contrôle de la température, configuré pour régler la température du cabinet et/ou la température du liquide dans la source de liquide ; le dispositif d'entrée comprend au moins un capteur de température ; et le processeur est en outre configuré pour régler le dispositif de régulation de température à une température prédéterminée ;
- le système comprend en outre au moins un dispositif de contrôle de l'humidité, configuré pour régler l'humidité du cabinet ; le dispositif d'entrée comprend au moins un capteur d'humidité ; et le processeur est en outre configuré pour régler le dispositif de régulation d'humidité à une humidité prédéterminée.

7. Système selon l'une quelconque des revendications 1 à 6, dans lequel les données d'entrée comprennent au moins l'un parmi :
- au moins une norme de référence, à fournir en tant que norme prédéterminée ;
- des données d'identification de la pipette ;
- au moins une image de la pipette, reçue d'un capteur d'imagerie ;
- au moins une image actuelle de l'indicateur de volume de la pipette, reçue d'un capteur d'imagerie ;
- l'intensité d'éclairage actuelle, reçue d'un capteur d'éclairage ;
- la température actuelle du cabinet, reçue d'un capteur de température ;
- la température actuelle du liquide dans la source de liquide, reçue d'un capteur de température ;
- l'humidité actuelle du cabinet, reçue d'un capteur d'humidité ;
- l'emplacement et l'orientation actuels de la pipette, reçus d'un processeur du bras robotique ;
- le poids actuel du liquide, reçu de l'élément de mise à l'échelle ;
- la pression atmosphérique actuelle ;
- le facteur Z calculé ;
- la densité actuelle de l'eau ; et
- toute combinaison de ceux-ci.

8. Système selon l'une quelconque des revendications 1 à 7, dans lequel le dispositif rotatif (400) est configuré pour faire tourner/régler le bouton d'une pipette, le système comprenant : -
- une base ferme (410) ;
- un moteur rotatif (420), configuré pour fournir un mouvement et un moment de rotation ;
- au moins une roue active (431), en communication rotative avec le moteur rotatif, configurée pour appliquer le moment sur le bouton et faire tourner/régler le bouton ; et
- un ensemble de couplage (440) monté par le biais d'un rail sur la base, configuré pour porter le moteur rotatif et au moins l'une des roues actives et pour coupler la ou les roue(s) active(s) au bouton et/ou pour séparer la ou les roue(s) active(s) du bouton, et donc pour contrôler l'application du moment sur le bouton ;
dans lequel l'ensemble de couplage comprend deux sections opposées, la première section étant configurée pour porter le moteur rotatif et au moins l'une des roues actives, et la seconde section étant configurée pour porter une autre roue active ou une roue passive , et dans lequel l'ensemble de couplage est configuré pour coupler toutes les roues des deux côtés du bouton.

9. Système selon la revendication 8, dans lequel l'ensemble de couplage comprend en outre un ressort de compression configuré pour amener les deux sections opposées l'une vers l'autre, et donc pour appliquer une force de compression sur le bouton.

10. Système selon l'une quelconque des revendications 8 et 9, dans lequel l'ensemble de couplage comprend en outre un piston comprenant un levier de piston ; le levier de piston étant situé entre les deux sections opposées, et étant configuré pour séparer les deux sections opposées lorsque le levier de piston dépasse du piston.

11. Système selon l'une quelconque des revendications 8 à 10, dans lequel au moins l'un des éléments suivants est vrai :
- la roue active et/ou la roue passive est montée sur l'ensemble de couplage par le biais d'un ou de plusieurs ressorts, configurés pour permettre mouvement le long de l'axe de la ou des roues ;
- la roue active et/ou la roue passive comprend du caoutchouc ;
- comprenant en outre au moins un processeur configuré pour contrôler le moteur rotatif et/ou l'ensemble de couplage, et donc pour contrôler la rotation/le réglage du bouton ;
- comprenant en outre au moins un capteur d'imagerie, en communication avec le processeur, configuré pour imager les chiffres d'un indicateur de volume de la pipette et, facultativement, de son unité de mesure indiquée, le processeur étant en outre facultativement configuré pour analyser l'image fournie et pour régler la rotation du bouton à une valeur prédéterminée en fonction de l'image analysée ;
- comprenant en outre un élément d'éclairage, configuré pour éclairer l'indicateur de volume ;
- comprenant en outre un dispositif de préhension, fermement relié à la base ferme et configuré pour tenir la pipette fermement et temporairement.

12. Procédé d'étalonnage automatique d'au moins une pipette utilisant le système selon l'une quelconque des revendications 1 à 11, le procédé consistant à :
- recevoir des données d'entrée, par le biais de l'au moins un dispositif d'entrée ;
- tenir et/ou relâcher une pipette, par le biais du dispositif de pression ;
- déplacer la pipette vers un emplacement et/ou selon une orientation prédéterminés, par le biais du bras robotique ;
- appliquer un angle de rotation prédéterminé sur un bouton-roue de la pipette, par le biais du dispositif rotatif ;
- appliquer une pression prédéterminée sur un bouton-poussoir de la pipette, par le biais du dispositif de pression ;
- mesurer le poids du liquide, par le biais de l'élément de mise à l'échelle ;
- évaluer un étalonnage de la pipette, en référence à une norme prédéterminée, par le biais du processeur ; et
- fournir un rapport d'étalonnage pour la pipette, par le biais du processeur et d'un dispositif d'affichage.

13. Procédé selon la revendication 12, dans lequel l'étape d'application d'un angle de rotation prédéterminé sur un bouton-roue, comprend la sélection d'un volume de liquide pour la pipette.

14. Procédé selon la revendication 13, dans lequel l'étape de sélection d'un volume de liquide pour la pipette comprend l'analyse, par le biais du processeur, d'une image d'un indicateur de volume de la pipette, fournie par un capteur d'imagerie.

15. Procédé selon l'une quelconque des revendications 12 à 14, dans lequel l'étape consistant à appliquer une pression prédéterminée sur le bouton-poussoir comprend l'aspiration du liquide depuis la source de liquide dans la pipette ; et/ou la distribution du liquide depuis la pipette sur l'élément de mise à l'échelle.
